# EUROPEAN PATENT SPECIFICATION

(11) **EP 1 677 209 B1**
(45) Date of publication and mention of the grant of the patent: **05.11.2008**
(21) Application number: 04031016.1
(22) Date of filing: 30.12.2004
(51) Int. Cl.: G06F 17/30

(54) **Searching based on object relationships**
Suche mit Hilfe von Objektbeziehungen
Recherche basée sur les relations entre des objets

(43) Date of publication of application: 05.07.2006
(73) Proprietor: SAP AG, 69190 Walldorf (DE)
(72) Inventor: Kindsvogel, Uwe, 76678 Ubstadt-Weiher (DE); Janssen, Tatjana, 31542 Bad Nenndorf (DE); Irle, Klaus, 69190 Walldorf (DE); Ludwig, Simeon, 64369 Mühltal (DE)
(74) Representative: Rocke, Carsten

(56) References cited:
- EP-A- 1 164 509
- US-A1- 2004 162 816
- SAMPLE N ET AL: "Managing Complex and Varied Data with the IndexFabric" PROCEEDINGS 18TH. INTERNATIONAL CONFERENCE ON DATA ENGINEERING (ICDE'2002), 26 February 2002 (2002-02-26), pages 492-493, XP010588266 ISBN: 0-7695-1531-2

## Description

### TECHNICAL FIELD

The description relates in general to searching based on relationships between data objects.

### BACKGROUND

In many applications, such as, for example, in enterprise resource planning (ERP), master data management (MDM), customer relations management (CRM), for instance as implemented within the products of SAP Aktiengesellschaft "R/3," "mySAP.com," "mySAP," and "SAP NetWeaver," data is stored within databases as data objects. The data objects can be, for example, business objects.

Insofar as data objects in general can be structured data, having properties and property values describing a respective real-world item, a company's information can be represented using data objects.

Business objects can be, for example, business partners, products, plants, machines, or any other real world objects being mapped into the respective data structure of the business objects. Various different types of data of a company, for example, information about persons and products, can be stored within the business objects.

Moreover, data objects can be connected virtually to each other using relationships. These relationships can represent, for example, relationships between business partners or any other items within a company. For example, one business object representing a particular company can be related to other business objects representing persons, for example, employees of the company. The relationship can be, in this case, an "employer-employee" relationship. Another example can be a business object representing a communication, e.g., an email, and a business object representing persons, for example, the person who wrote the email and the person to whom the email was addressed. In the first case, the relationship between the email and the author can be an "author-document" relationship and in the second case, the relationship can be a "recipient-document" relationship. It is also possible to have relationships between business objects of the same type.

In known systems running, for example, an ERP system, information about a company is stored in the business objects. Users working with the system often face the problem that they search for certain business objects, but do not have enough information relating to the searched business object to determine exactly the business object searched for from other business objects being similar, but not exactly, what the users are searching for.

For example, a user wants to find a particular company, but only knows that this company is located in Germany. A search for companies in Germany would yield too many search results to review. The user further knows that the company he or she is looking for delivers screws and that a person called "Otto Maier" works for the company.

Within the running ERP system, business objects for screws are stored, which can have a relationship with the supplying company. Moreover, contact persons can be stored in business partner person business objects, which may have a relationship with the company business object representing the company for which the persons work. In known systems, however, the stored information is distributed in different types of business objects. Even though the user has more information about the company he is seeking than is stored in the respective company business object representing the company, the user cannot find the desired company within a common search engine by defining attributes, criteria, or pieces of content of business objects that the searched business objects need to meet.

In common search engines, users can only search in unstructured documents, which are indexed in a full-text index. An index can be a physical representation of the data in the search engine, e.g., attributes and their values can be stored and accessed in fields. The index, as used by common search engines, does not allow searching for business objects with information about pieces of attributes or pieces of content of related business objects. Insofar as search engines have the benefit of providing search results very quickly, search engines are preferred over database searches; however, search engines do not provide any information about business object relationships. The search engines cannot be used for searches utilizing this additional relationship information.

It has already been proposed to map structured business objects into indexes usable for search engines. It has also been described how to search for business objects using search engines within application US 2004-0162816, application number 10/367,661 in the name of SAP Aktiengesellschaft.

Nevertheless, known methods do not allow searching for business objects using search engines with attributes or pieces of content of related business objects.

Document "Managing Complex and Varied Data with the IndexFabric" [Sample, Cooper, Franklin, Hjaltason, Shadmon, Cohen], Proceedings of the 18th International Conference on Data Engineering (ICDE 2002), 26 February - 1 March 2002, San Jose, California, USA, pages 492-493 (Dl) relates to managing complex and varied data with the IndexFabric. The object according to D1 is to overcome the disadvantages of joins which are normally used within databases. Joins may be used to reconstruct relationships between data items but they offer disadvantages. Within the IndexFabric relationships between data items are explicitly materialised as self-describing entries. Relationships are represented by designated strings and data items are tagged with a designator. One item type is combined with other items which have different designators. Such relationships may be encoded by strings as [242]. It is also possible to combine different item types. However, such relationships are not indexed.

Therefore, data with different relationships are stored in a single. Such a system according to the example of the document may be used for product catalogs. In D1 a system called.PATRICIA (Practical Algorithm to Retrieve Information Coded in Alphanumeric) trie is used for storing and querying relationships.

### SUMMARY

In order to overcome one or more of the above-mentioned problems and to enable a search engine to search for data objects (e.g., business objects) using relationships between different business objects, one embodiment provides a method for searching data objects using indexes within a search engine, with creating a first index of a search engine, wherein creating the first index comprises indexing data objects of at least a first type; creating a relationship index, wherein creating the relationship index comprises indexing relationships of data objects of at least the first type, wherein indexing the relationships comprises mapping relationship-type data objects representing the respective relationships into documents and indexing the documents; determining relationships of data objects from at least the relationship index; and searching within related data objects for data objects in compliance with at least one search criterion.

One embodiment comprises searching within the first index for data objects of the first type with content that at least partially meets a first search criterion and obtaining a first set of data objects.

Determining relationships of the data objects comprises, according to one embodiment, determining relationships of the data objects of the first set of data objects.

One embodiment also comprises creating at least a second index of a search engine, wherein creating the at least second index comprises indexing data objects of at least a second type.

Determining relationships of the data objects of the first set of data objects comprises, according to one embodiment, finding related data objects within an index.

One embodiment also comprises providing a data object as a search result directly using one single search request.

Indexing the relationships of the data objects can comprise indexing the relationships in the first index according to one embodiment. Indexing the relationships of the data objects can also comprise indexing the relationships in the second index, according to one further embodiment.

Determining relationships of data objects can comprise, according to one embodiment, searching within at least one of the relationship indexes: the first index, or the second index.

One embodiment can further comprise creating a joinindex, wherein creating the join index can comprise indexing a relationship index for a particular type of data object together with the related data objects.

Another embodiment can comprise creating an overview index, wherein creating the overview index comprises indexing the join indexes of the different types of data objects. This overview index can be, according to one embodiment, a joined index of all join indexes. The overview index may allow searching whether any relationships between particular data objects exist.

One embodiment can further comprise searching within the join index for relationships between the data objects of the first type and related data objects and obtaining a join path between the data object of the first type and related data objects.

The search engine can automatically find data objects based on attributes of related data objects by using join conditions. One embodiment provides using the join path to obtain the search result. The join path may allow searching automatically for data objects having a relationship with other data objects with attributes in compliance with a search statement.

The search engine may allow fast searching within indexes. Indexes, which represent data objects, may be separated from each other inasmuch as each index may represent data objects of one particular type only. One embodiment can provide indexing within the first index solely data objects of the first type. Another embodiment can provide creating the second index by indexing solely data objects of the second type.

One embodiment can also provide searching for a data object by receiving user-inputted search statements dedicated to the first type of data objects or to the second type of data objects. The user may be enabled to enter search criteria for the data objects and the relationship between the data objects within one query with several text fields. The user may carry out "One-Click-Searching" and does not have to execute three different queries separately.

Business objects may be stored in databases with appropriate data structures. These data structures can be mapped onto unstructured documents and indexed thereafter. An appropriate data structure for the relationship object is required. One embodiment provides storing within the relationship-type data objects at least one of a relationship type, a relationship identifier, a data object identifier of the related data objects, data object types of the relate data objects, and/or an object role of the related objects. The data object identifiers can identify the related data objects unambiguously.

According to one embodiment, searching for a data object can comprise receiving with a search statement information about a type of relationship and searching for relationships between data objects only of the respective type. The user may specify the type of relationship between the searched data objects.

Searching for a data object can comprise, according to one embodiment, using a search engine to execute the search within its indexes.

Creating the at least first index can comprise mapping data objects in unstructured documents and indexing the unstructured documents for each type of object into the respective index, according to another embodiment.

Searching for a data object can comprise searching for data objects of a first type within the first index in compliance with a first search statement, determining from the join index related data objects, and providing as a search result all data objects that are related to a data object of the first type in compliance with the first search statement, according to one embodiment. This embodiment can allow a search for data objects, which are related to particular data objects. The search results can be described as "referred-to by." The resulting list of data objects can have in common that all of them are referred to by data objects in compliance with a search statement.

Searching for a data object can comprise searching for the data object in compliance with the search statement within the at least one index using a full-text search, according to one embodiment.

Another aspect of the disclosure is a search engine arranged for searching data objects using indexes with at least a first index indexing data objects of at least a first type; a relationship index indexing relationships of data objects of at least the first type where relationship-type data objects representing the respective relationships are mapped into documents and the documents are indexed; a search module arranged for determining relationships of data objects from at least the relationship index, and for searching within related data objects for data objects in compliance with at least one search statement.

A further aspect of the disclosure is a computer program product tangibly embodied in an information carrier, the computer program product comprising instructions that, when executed, cause at least one processor to perform operations comprising creating a first index of a search engine, wherein creating the first index comprises indexing data objects of at least a first type; creating a relationship index, wherein creating the relationship index comprises indexing relationships of data objects of at least the first type, wherein indexing the relationships comprises mapping relationship-type data objects representing the respective relationships into documents and indexing the documents; determining relationships of data objects from at least the relationship index; and searching within related data objects for data objects in compliance with at least one search statement.

Referring now to the drawings, in which like numerals represent like elements throughout the several figures, several embodiments will be described.

### BRIEF DESCRIPTION OF THE DRAWINGS

In the FIGs:
- FIG. 1: is a block diagram of a computer system suitable for enabling an inventive search method, according to one embodiment;
- FIG. 2: is a block diagram of a system architecture for business objects searches using search engines, according to one embodiment;
- FIG. 3: is a class diagram of a business objects and a relationship object, according to one embodiment;
- FIG. 4: is a relationship example for two business objects of different type, according to one embodiment;
- FIG. 5: is a table with attributes of a relationship-type data object, according to one embodiment;

- FIG. 6: is an illustration of different types of indexes and their scope, according to one embodiment; and,
- FIG. 7: is a flowchart of a method for providing searches for business objects using their relationship, according to one embodiment;
- FIG. 8: is an illustration of creation of a JOIN Index, according to one embodiment;
- FIG. 9: is an illustration of different data object tables and their indexes, according to embodiments;
- FIG. 10: is an illustration of a relation table for relations of people business objects and its index, according to embodiments;
- FIG. 11: is an illustration of a join index and a search using a join index, according to one embodiment.

### DETAILED DESCRIPTION

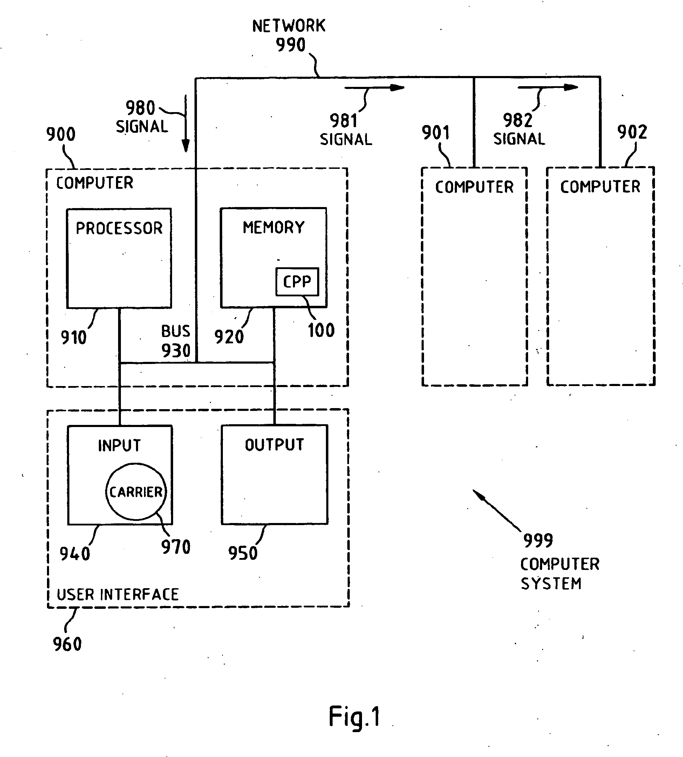

In FIGs. 1-11, while reference numbers 100/200, 110/210 ... can denote similar elements, the function of these elements can be different.

FIG. 1 illustrates a simplified block diagram of exemplary computer system 999 having a plurality of computers 900, 901, 902 (or even more).

Computer 900 can communicate with computers 901 and 902 over network 990. Computer 900 has processor 910, memory 920, bus 930, and, optionally, input device 940 and output device 950 (I/O devices, user interface 960). As illustrated, the invention is implemented by computer program product 100 (CPP), carrier 970 and signal 980. With respect to computer 900, computer 901/902 is sometimes referred to as "remote computer," computer 901/902 is, for example, a server, a peer device or other common network node, and typically has many or all of the elements described for computer 900.

Computer 900 is, for example, a conventional personal computer (PC), a desktop device or a hand-held device, a multiprocessor computer, a pen computer, a microprocessor- based or programmable consumer electronics device, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 is comprised of elements that temporarily or permanently store data and instructions. Although memory 920 is illustrated as part of computer 900, memory can also be implemented in network 990, in computers 901/902 and in processor 910 itself (e.g., cache, register), or elsewhere. Memory 920 can be a read-only memory (ROM), a random access memory (RAM), or a memory with other access options. Memory 920 is physically implemented by computer-readable media, for example: (a) magnetic media, like a hard disk, a floppy disk, or other magnetic disk, a tape, a cassette tape; (b) optical media, like optical disk (CD-ROM, digital versatile disk - DVD); or (c) semiconductor media, like DRAM, SRAM, EPROM, EEPROM, memory stick.

Optionally, memory 920 is distributed. Portions of memory 920 can be removable or non-removable. For reading from media and for writing in media, computer 900 uses well-known devices, for example, disk drives, or tape drives.

Memory 920 stores modules such as, for example, a basic input output system (BIOS), an operating system (OS), a program library, a compiler, an interpreter, and a text-processing tool. Modules are commercially available and can be installed on computer 900. For simplicity, these modules are not illustrated.

CPP 100 has program instructions and, optionally, data that cause processor 910 to execute method steps of the present invention. In other words, CPP 100 can control the operation of computer 900 and its interaction in network system 999 so that it operates to perform in accordance with the invention. For example and without the intention to be limiting, CPP 100 can be available as source code in any programming language, and as object code ("binary code") in a compiled form.

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture having a computer-readable medium with computer-readable program code to cause the computer to perform methods of the present invention. Further, signal 980 can also include computer program product 100.

Having described CPP 100, carrier 970, and signal 980 in connection with computer 900 is convenient. Optionally, further carriers and further signals embody computer program products (CPP) to be executed by further processors in computers 901 and 902.

Input device 940 provides data and instructions for processing by computer 900. Device 940 can be a keyboard, a pointing device (e.g., mouse, trackball, cursor direction keys), microphone, joystick, game pad, scanner, or disc drive. Although the examples are devices with human interaction, device 940 can also be a device without human interaction, for example, a wireless receiver (e.g., with satellite dish or terrestrial antenna), a sensor (e.g., a thermometer), a counter (e.g., a goods counter in a factory). Input device 940 can serve to read carrier 970.

Output device 950 presents instructions and data that have been processed. For example, this can be a monitor or a display, cathode ray tube (CRT), flat panel display, liquid crystal display (LCD), speaker, printer, plotter, and vibration alert device. Output device 950 can communicate with the user, but it can also communicate with other computers.

Input device 940 and output device 950 can be combined to a single device. Any device 940 and 950 can be provided optionally.

Bus 930 and network 990 provide logical and physical connections by conveying instruction and data signals. While connections inside computer 900 are conveniently referred to as "bus 930," connections between computers 900 902 are referred to as "network 990." Optionally, network 990 includes gateways, which are computers that specialize in data transmission and protocol conversion.

Devices 940 and 950 are coupled to computer 900 by bus 930 (as illustrated) or by network 990 (optionally). While the signals inside computer 900 are mostly electrical signals, the signals in network are electrical, electromagnetic, optical or wireless (radio) signals.

Networks are commonplace in offices, enterprise-wide computer networks, intranets and the Internet (e.g., the world wide web (WWW)). Network 990 can be a wired or a wireless network. To name a few network implementations, network 990 can be, for example, a local area network (LAN), a wide area network (WAN), a public switched telephone network (PSTN); an Integrated Services Digital Network (ISDN), an infra-red (IR) link, a radio link, like Universal Mobile Telecommunications System (UMTS), Global System for Mobile Communication (GSM), Code Division Multiple Access (CDMA), or a satellite link.

A variety of transmission protocols, data formats and conventions is known, for example, transmission control protocol/internet protocol (TCP/IP), hypertext transfer protocol (HTTP), secure HTTP, wireless application protocol (WAP), unique resource locator (URL), a unique resource identifier (URI), hypertext markup language (HTML), extensible markup language (XML), extensible hypertext markup language (XHTML), wireless markup language (WML), and Standard Generalized Markup Language (SGML).

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

The terms "computer" and "program" are closely related. As used hereinafter, phrases, such as "the computer provides" and "the program provides," are convenient abbreviations to express actions by a computer that are controlled by a program.

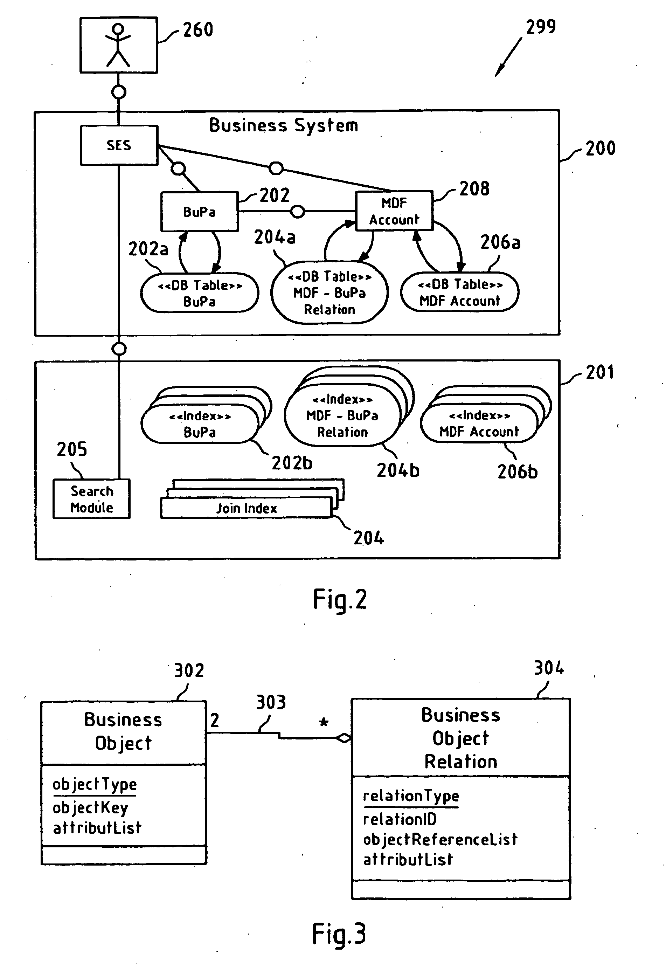

FIG. 2 illustrates a computer system 299 with an ERP system 200, which is operated using a user interface 260. The ERP system 200 is supported by a search engine 201. The search engine 201 can comprise a search module 205 and various indexes 202b, 203, 204b, 206b. In the given ERP system 200, each business object and each relationship between business objects have their own table in a database 202a, 204a, 206a.

In the illustrated ERP system 200 two different types of business objects 202, 208 can be used. The business partner business objects 202 and the master data framework (MDF) objects 208 are illustrated. The master data framework can be understood as a generic model for any type of business objects. Both types of business objects 202, 208 are stored in respective database tables 202a, 204a, 206a. The business partner business objects 202 are stored in database table 202a. The MDF objects 208 are stored in table 206a. The relationships between the business partner business objects 202 and the MDF objects 208 are stored as relationship objects in a separate database table 204a.

The database tables 202a, 204a, 206a allow searching for particular business objects using search statements, such as structured query language (SQL) statements; however, the search in the database tables 202a, 204a, 206a is slow. A search using a search engine is not possible within the database, as the data structure does not allow such a type of search. One requirement of a search engine is that all data that should be searchable must be indexed into indexes of the search engine. Without indexing the relevant data, it is impossible to search for the data using the search engine.

A database allows accessing objects using attributes only. The search for attribute values is an exact search; in other words, databases do not allow searching for values using a "fuzzy" search-that is, an approximate search or a similarity search. The search within a database is significantly slower than within a search engine. One reason is that the database is optimized for read and write access and for reducing storage size. The search engine, in contrast, is optimized for read access only. The index of a search engine is provided within main memory, whereas the index of a database is stored on a hard disk and is cached in main memory only if necessary. The search engine's index provides a dictionary for searching documents, whereas the database only provides attribute access using SQL.

A significant difference between a database and a search engine is the dictionary. The dictionary enables accessing the objects using a full-text search. When searching for search terms, the search engine can, in addition to the full-text index, provide an attribute index. The search engine can provide a fault-tolerant search. The search statements must not be exact matches of the attributes of the found data objects, which is a so-called "fuzzy search." The dictionary allows quick full-text searches. In contrast to databases, the search engines also allow diffuse searches, where the attribute values of the found data objects must not exactly match the search statements. The search engines are optimized for quick read access, whereas, in contrast, databases are optimized for quick read/write access. The data used for the search is stored in main memory, whereas databases use caching of currently used pieces of the data.

In addition, the search engine 201 according to embodiments can provide an index 204b for relationship-type data objects representing relationships between data objects. The relationships between the data objects can be stored in the relationship-type data objects, which will be described in more detail in FIGs 3-5. These relationship-type data objects can be structured pieces of data. The relationship-type data objects can store all relevant information to describe a relationship between data objects. The relationship-type data objects can be mapped into unstructured documents, according to one embodiment. The resulting documents can be indexed within a relationship index, which can be a full-text index, enabling search engines to search business objects by relationships. For each type of data object, one relationship index can be created. The search engines can search within the relationship index for a type of relationship.

The search over multiple indexes is supported by a join of indexes, e.g., by following a join path, which enables providing a search within different indexes simultaneously. The join of indexes can be provided by a join index, which is an aggregation of a relationship index for a particular type of data object and all related data object indexes.

The search module 205 can be operated using a computer program product 100. Users can access the search engine 201 through the user interface 260. The search module 205 can provide a search mask and search results through the user interface 260.

Searching for data objects being related to each other with search statements concerning both the searched data object and the data object being related to the searched one can be provided.

The search statement can be, for example, a string of characters. For example, a user can search with a search statement, "Germany," used for business objects of the type "company," which relates to the location of the company, and with a search statement, "Otto Maier," used for a business object of the type "business partner person." Further, the search can be delimited to companies delivering "screws" by providing a further search statement for business objects of the type "delivered items."

The search engine 201 can use the search statements to search within its indexes for relevant documents or data objects. Additionally, to allow searching for data objects by way of information about related data objects, users can be required to enter at least two different search statements. Users can define a search statement for data objects of at least the first type. The data objects of the first type can be related to other data objects of the first type or to data objects of at least a second type. The search engine can be, however, unable to resolve which search statement relates to which type of data objects.

Users can decide which search statement belongs to which type of data object. One example can be a search for a company in Germany with an employee named Otto Maier. The user can enter "Germany" and can decide that this search statement is relevant for data objects of the type "company." The user can further enter "Otto Maier" as the user is searching only for companies in Germany that employ persons named "Otto Maier." The search statement "Otto Maier" can be assigned by the user to the data object type "business partner person." Having this information, the search engine 201 can search for "Germany" in a company index. The search results can be used to query a relationship index and determine data objects which have a relationship with the found ones for "Otto Maier" as a business partner person. Only those data objects that are related to the found one can be searched.

In the above example, search results would also contain all companies in Germany, whose CEOs are named Otto Maier. The user might know that the company he is searching for, however, has only an employee called Otto Maier. The user can limit the search to relationships between the objects he or she is aware of.

The search can be conducted on the data object inasmuch as it can be determined whether at least pieces of content or pieces of attributes of the data objects meet the search criteria.

The search engine 201 can be a TREX search engine as provided by SAP Aktiengesellschaft, or another search engine capable of providing a join of indexes. Embodiments provide mapping every database table 202a, 204a, 206a into flat documents, and indexing these as separate indexes 202b, 204b, 206b for the search engine. Every entry in the business partner business object table 202a is mapped into a document, and the documents are indexed into a business partner business object index 202b. The same is done for the MDF business objects 206a, which are indexed within the index 206b.

According to embodiments, the relationship objects, which are stored in table 204a, are also mapped into documents and indexed separately within index 204b of the search engine 201.

The relationship objects store a link to each of the related business objects. The business objects themselves may not store any information about the relationship object or about the relationship. All relationship objects can be mapped into flat documents. The documents thus only represent the relationships. The documents can be indexed into an index 204b for the search engine. The search within the search engine can thus be extended from searching for attribute values of one business object to attribute values of related business objects.

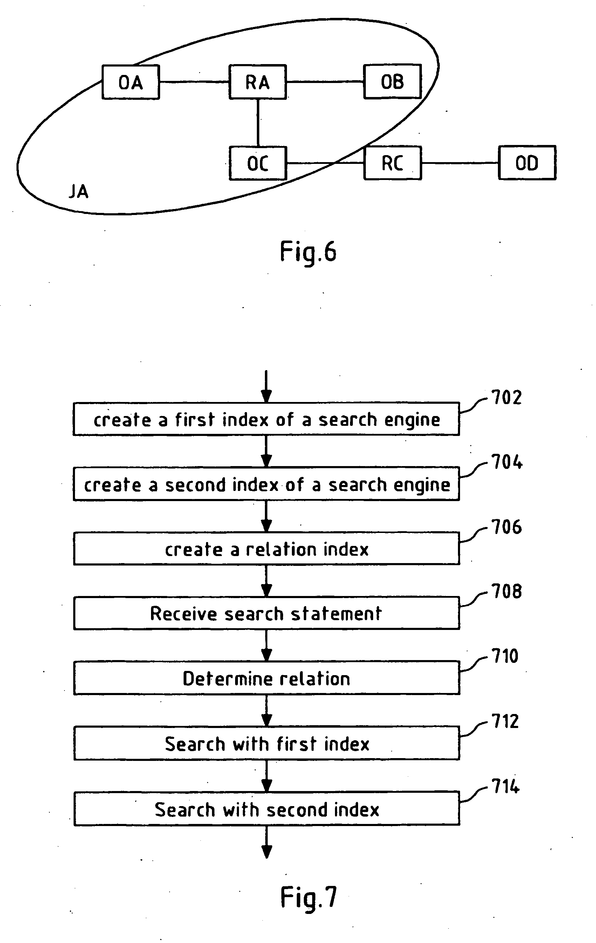

The search engine 201 supports joins of indexes. This can be done by creating a join index 203. The join index 203 and the other indexes are further described in FIG. 6. The join of indexes allows following links of a field of one index to a field of another index using the join index. The join feature of a search engine can provide creating join paths that represent links between two fields of different indexes. A unique identifier of each business object, which is part of a relationship, is stored in a reference field of a relationship object. In an exemplary case, two join conditions are defined to represent a relationship. One join condition represents the link between business object A and the relationship objects, e.g., one join condition between the identifier field of business object A and the 'reference-to-business object-A' and one join condition between the 'reference-to-business object-B' field and the identifier field or business object B. The two join conditions together build the join path, which can be followed by the search engine.

After a unique identifier of a business object has been found in the reference field of a relationship object, the search engine can follow the join of indexes to access and compare data from a related business objects with a search statement.

Users can search the relationship object and the search can follow the join paths in both directions. The search engine 201 can search for property and attribute values of the business objects following the join path to a first business object and later following the join path to a second business object, which is related to the first business object. The second business object can be searched for with a second search statement.

Embodiments provide an object model for the relationship objects as illustrated in FIG. 3. The additional information relating to the relationship between business objects is stored in a separate relationship object 304, which is connected 303 to the respective business object 302. There can be different relationship object types. Each relationship type may have several relationship instances. One relationship instance can represent the relationships between one particular data object A and another particular data object B, whereas another relationship type can represent a 'generic relationship' type, e.g., indicating that there is a relationship that connects business objects of a first type with business objects of a second type. Because each relationship data object is a representative of a particular relationship per se, there must be several relationship data objects.

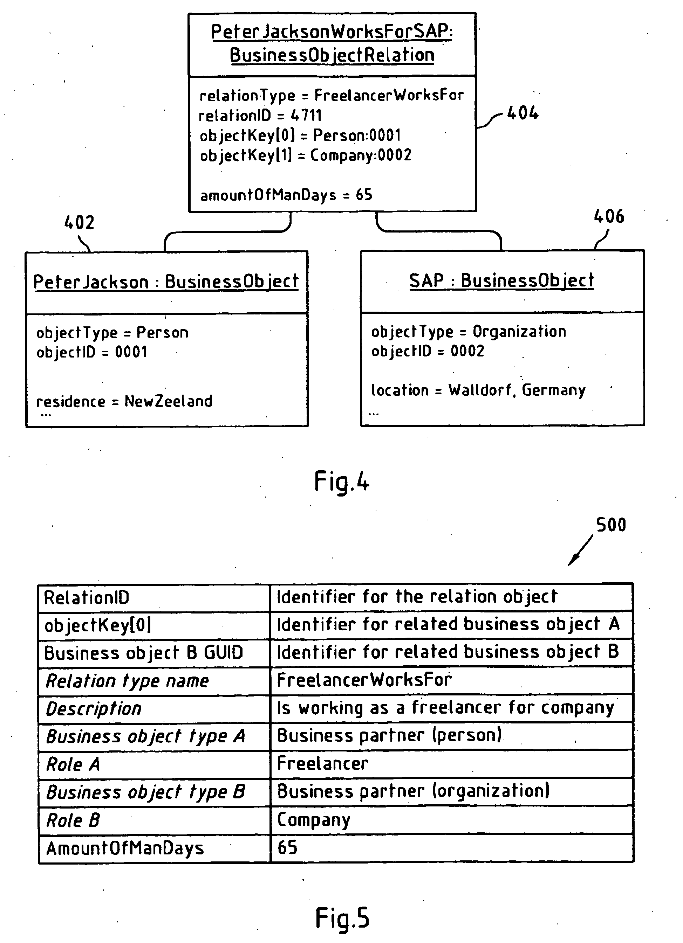

Relationship objects 304 can have attributes as shown in the class diagram illustrated in FIG. 5.

FIG. 4 illustrates an object diagram, which shows an example of a relationships between business objects 402, 406. This diagram illustrates a relationship object instance 404 of the relationship type "FreelancerWorksFor." The attributes of this relationship object instance 404 are listed in FIG. 5.

The attributes relationship type name, description, business object type A, business object type B, role A, and role B of table 500 in FIG. 5 can be equal in each relationship object instance 404 of a given relationship type. The other attributes of table 500 can be different for each relationship object instance 404.

The business objects 402, 406 only store attributes that represent their state, but neither contains a link to the related business object 402, 406 nor to the relationship object instance 404. All data about the relationship is stored in the relationship object instance 404. The business objects 402, 406 only store their own data.

To allow searching the information using a search engine, the data objects of each type, and even the relationship data model, can each be mapped into its own index. This can be done by mapping the structured data objects into unstructured documents and by creating indexes of the unstructured documents. The indexes can be attribute indexes and/or full-text indexes.

For example, at least parts of a data model of a relationship data object R01 that express a relationships between business object 001 and business object 002 can comprise:
*relationship.relationID="R01"*
*relationship.fromObjectID="O01"*
*relationship.toObjectID="O02"*

After mapping this structured data object into a document, the document can comprise:
*Content=<empty>*
*AttributeList*
*name="relationID", value="R01"*
*name="fromObjectID", value="O01"*
*name="toObjectID", value="O02"*

These relationship documents can be used to create the relationship index. The relationship index can comprise attributes and content of the relationship documents.

The solution according to embodiments no longer has any redundancies or ambiguities because the relationships can be mapped into separate objects. Each relationship can be represented by a unique identifiable relationship object. No information about the relationship needs to be stored in the related business objects.

FIG. 5 illustrates a table 500 with attributes of a relationship type business object. The relationship type object represents all attributes that are common for business object instances of this relationship type. One attribute can be the relationship type ID, distinguishing the relationship type from other relationship objects. Another attribute can be the description of the relationship, which is a comprehensive description of the relationship type. Further attributes can be the business object types of the related business objects. Yet other attributes can be the roles the business objects play in the relationship. Another attribute can be a relationship ID, which is a global unique identifier (GUID) to identify a relationship object. The attribute's object key and business object B GUID can contain references (IDs) to the business objects, which are connected by the respective relationship object. These IDs allow identifying the related business data objects unambiguously.

FIG. 6 illustrates the scope of various different indexes. For each type of business object, a particular index OA, OB, OC, OD is provided. The relationships between the business objects are indexed in relationship indexes. FIG. 6 illustrates the indexes relevant for business of type A. For other types of business objects, other indexes are relevant. The relationships emerging from business objects of type A are indexed in relationship index RA. The relationships emerging from business objects of type C are indexed in relationship index RC.

To create join paths, with join conditions, a join index JA for the business objects of type A is provided. For each type of business object, a separate join index can be provided. The join index JA comprises information about the relationship conditions within the relationship index RA and the object information within the related object indexes OA, OB, OC. The join index allows the search engine to follow paths to business objects, search within the business objects, track back paths of found business objects to searched types of business objects and search within the relevant searched types of business objects. An overview of join indexes can be provided within an overview index (not depicted).

The join index can be a collection of the participating indexes, e.g., the object indexes of the respective types and the relationship index. A join index for data objects of a type A can comprise the relationship index for objects of the type A, the data object index for the type A and the related data object indexes of the related data objects. The join index can be a virtual table that contains all the data of the "participating" tables. The relationships of the data object relationship objects and the related business objects can be stored in the join index as join conditions. Each join condition can represent a relationships between two objects. A join index can comprise at least two join conditions: one to represent the relationships between a business object of a particular type and the relationship object, and a second to represent the relationships between the respective relationship object and the related business object.

In the data model a join index can contain a relationship index for a particular type of data object together with the object indexes of the related data objects. The business objects are indexed within their object index. The relationships are indexed within their relationship index. While the object and the relationship indexes are physical indexes, the join index can be a logical index that provides an overall view across the physical indexes and their connections described as join paths.

The search engine can, for example, follow a track from a search business object back to related business objects using the join index. Within the related index, the search engine can search for objects, which meet the search condition. For the found objects, the search engine can track back the relationship with the relationship index and from there back to the index of the searched objects. Within this index, the search engine can search within the remaining objects for a second search condition to find the searched data object.

In the data model a join path can define a connection between two object indexes along a relationship index: Object-Index-A - Relationship-Index-A - Object-Index-B. This allows searching for Objects of Type A by providing search criteria of related Objects of Type B. For each type of relationship, one join path can be defined. For example, one join path for the relationship type "is supplier of product" and one join path for the relationship type "is customer of product" can be defined. This allows searching for products based on supplier data.

By using the join path between a first data object and a second data object to obtain the search result, the search engine can automatically follow a link from one data object to related data objects and search within the index of the related data objects. For example, if a data object has been found for a first search statement and it has been found that the first data object is related to data objects of a second type, the search engine can follow this join path and search within the index relating to the second type for data objects in compliance with a second search statement. The search result then can contain those data objects that have a relationships to data objects in compliance with a search statement.

FIG. 7 illustrates a flowchart of a method according to embodiments for searching data objects using indexes within a search engine.

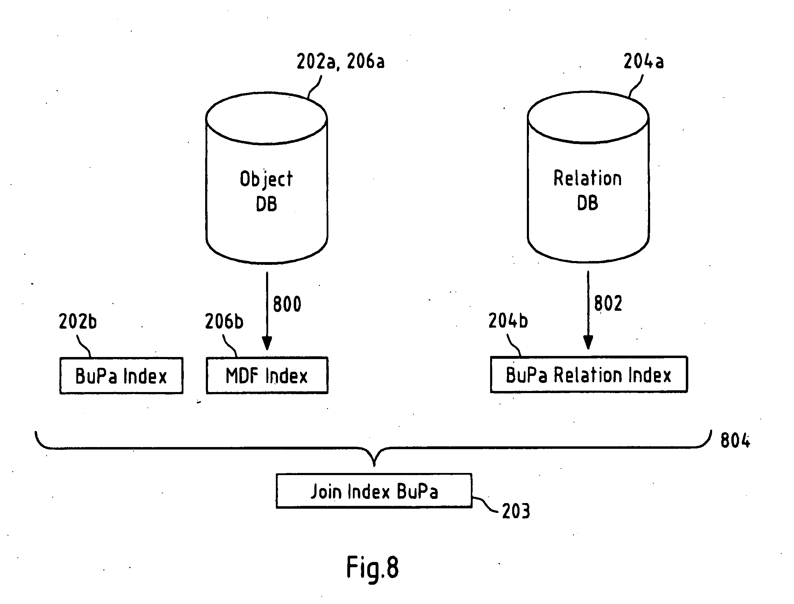

Business objects of a first type are indexed within a first index of the search engine (702). Business objects of a second type are indexed within a second index of the search engine (704). The relationships between the business objects of the first type and the business objects of the second type is indexed within a relationship index of the search engine (706). In addition, a join index can be created, providing an overview of a relationship object and all related indexes of data objects. The creation of the join index is illustrated in FIG. 8. Also, an overview index can be created. The overview index can be an index of all join indexes, enabling searching for relationships without knowledge of the relationship types.

Having indexed the values of the business objects in separate indexes and having indexed the relationships between the business objects in a join index, the search engine can receive user inputs (708) of at least two search statements for values of attributes of business objects of different types, or of the same kind, for business objects that need to be related. The user can define within the search statement attributes that the searched data objects and the data objects related thereto must meet at least partially. The search engine can allocate the data objects in compliance with the search statements.

The search statement comprises search criteria for business objects of a first type and business objects of a second type and a relationship between the business objects. The relationships between the business objects, which can be of different types or of the same type, can be used for searching (710) within the join index to determine join paths between respective relationships of the corresponding business objects. The relationship type can also be specified by the user, to specify the search further. The type of the relationship, for example, could be "delivered items". The join path can be determined by determining from the join index the relevant relationship object instances, determining the IDs of the related business objects and providing a link to each of the related business objects.

The join paths can be followed into one direction to search (712) for business objects of the first type that meet the first part of the search statement. The search can be conducted automatically in a first index or a representation of the first index in the join index for the data objects of the first type, for example of the type "company."

The join paths of the found business objects of the first type can be followed in the other direction to search (714) within the second index or a representation of the second index in the join index for the data objects of the second type, for example of the type "business partner person."

A join index can be a virtual representation of a relationship index for a particular type of business objects and all related business object indexes.

For example, from object databases 202a, 206a, corresponding business object indexes 202b, 206b can be created (800). In addition, for each of the different types of business objects, one relationship index can be created. For example, the relations of business objects of the type business partners, are stored in relationship database 204a. This database can be used to create (802) a relationship index 204b for the business objects of the type business partner. For all other types of business objects, a corresponding relationship index can be created.

A join index 203 can be built (804) by determining from the relationship index 204b all related business object indexes 202b, 206b. The join index 203 comprises references to all business object indexes, which are referenced by the relationship index of a particular type of business object. In addition, the join index comprises the reference to the relationship index itself.

The join index 203 is a virtual index without any data entries of the business object data. It comprises only references to the indexes. At runtime, it can be used by the search engine, to retrieve the entries from the referenced indexes and from there the entries of the business objects. To avoid redundancy, data can only be stored in the business object and relationship index. The join index can comprise a mere reference to the corresponding indexes. The data can be retrieved from the corresponding indexes at runtime dynamically.

From the perspective of the application, e.g. the search engine, the join index already comprises the data sets. This enables the search engine to created join paths and to follow the join paths to search within related business objects.

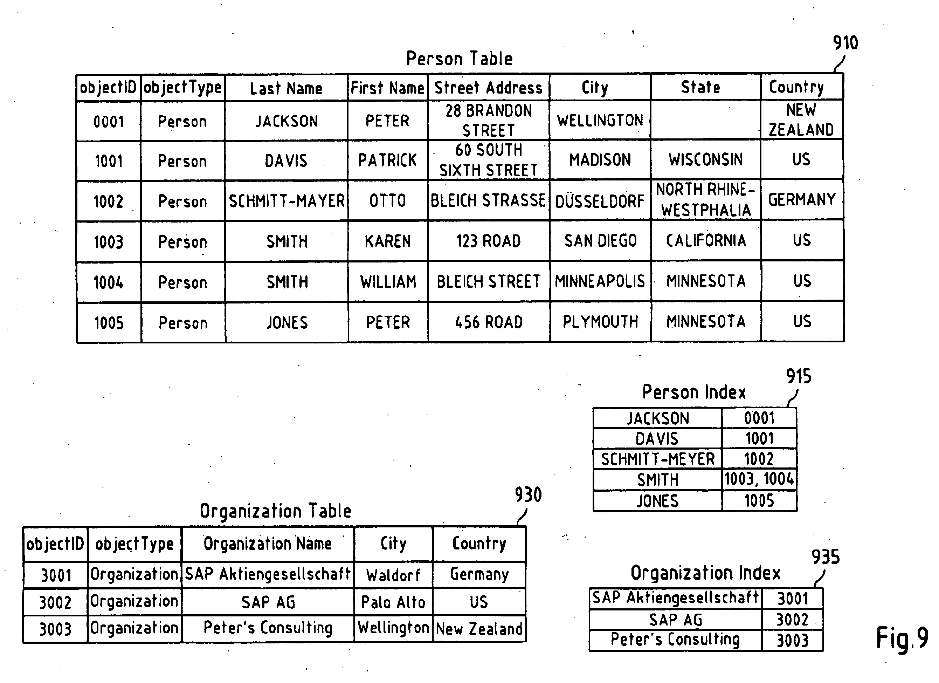

FIG. 9 illustrates different data object tables. A first table 910 stores data of data objects of the type people. Illustrated are attribute data of the corresponding data objects of the type Person. The attributes of the data objects are object type, Last Name, First Name, Street Address, City, State, Country. Other attributes are also possible, but not illustrated. Each entry in the table 910 has an own objectID, allowing to identify this entry.

For the table 910, an own index 915 can be created. This index 915 can be an index of the attribute "Names" of the data objects stored in table 910. For example, the name "Smith" of the data objects in the table 910 is indexed by having references 1003, 1004 to the entries in the table 910. The name "Davis" is indexed with references to the table 910 entry 1001. Other indexes can be derived from the figure.

Further, FIG. 9 illustrates a table 930. This table 930 represents data of data objects of the type organization. The attributes of these data objects of the type organization can be organization name, city, country. For each data object of the type organization, one row can store the attribute values. The data objects can be identified by the objectIDs, which allow identifying the corresponding data object entry in table 930

An index 953 for the data objects of the type organization in table 930 can also be created. The index 935 can index, for example, the attributes "Organization Name" of the data objects of the type organization stored in table 930. For example, the data objects having an entry with the string "SAP Aktiengesellschaft" can be indexed in the first row of index 935, where the reference 3001 refers to the entry in the table 930. Other examples can be taken from the illustration.

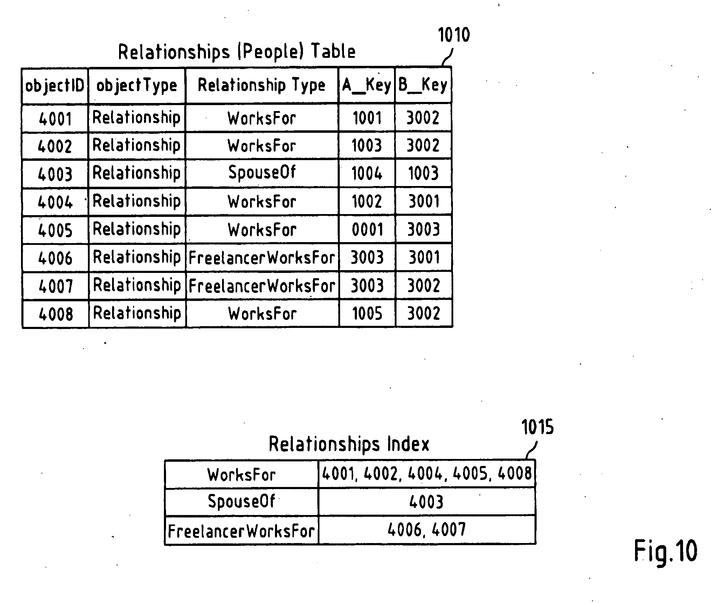

FIG. 10 illustrates a relationship table 1010. For each type of business object, the respective relationships to other business objects can be stored in such a table. The table can contain objectIDs of each relationship objects involved in the relation, and the relationship type. The objectIDs of the data objects involved in the relation can refer to data objects in table 910 or 930, depending which data objects are involved in the relationship.

For example, the table 1010 stores the relationships of business objects of the type person. Each relationship is stored in one row. The relationship can be identified by the objectID. The relationship type can be stored together with the related data objectIDs. The related objectIDs can be referenced to by the A_Key and B_Key. The table 1010 has references to data objects of the type person, e.g. the objectIDs 1001, 1003,.. and references to organizations, e.g. objectIDs 3002, 3001, 3003.

For example, a relationship "WorksFor" can be represented by the objectIDs 4001, 4002, 4004, 4005. 408. A relationship "SpouseOf" can be represented by objectID 4003. This relationship represents a relation between the data objects with objectIDs 1004 and 1003.

For the relationship table 1010, an own relationship index 1015 can be created. For each type of relationship, one row in the index 1015 can be provided. The relations of the type "WorksFor" are indexed in the first row, having references to the entries 4001, 4002, 4004, 4005 and 4008 in the relationship table 1010. All of these entries are of the type "WorksFor". Other types of relationship are also indexed in relationship index 1015, for example, the relationship of the type "FreelancerWorksFor", which comprises the relationship entries in table 1010 with objectIDs 4006, 4007.

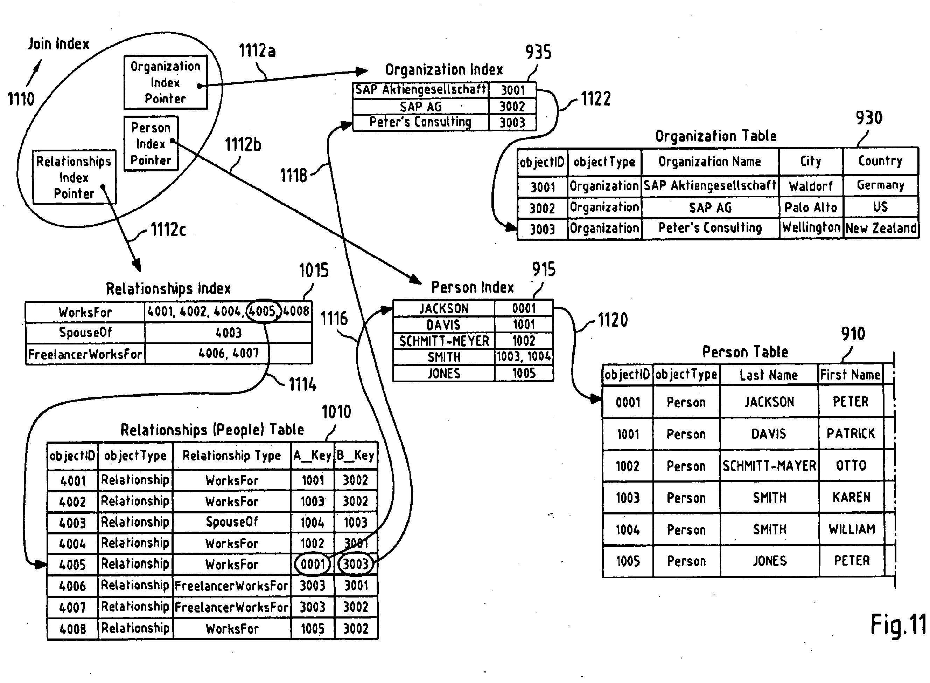

A user may wish to search for a person named "Peter" who works for a company located in New Zealand. The user may use a computer-implemented method, as described herein to locate additional information, based only on a first name, a country and a relationship. Referring to FIG. 11, the method may use a join index 1110 for people. The join index 1110 may comprise pointers to various other indexes. For example, the join index 1110 may comprise pointers (or references) to a relationships index 1015 for people, a person index 915 and an organization index 935.

The method may locate the correct person in the following manner. Based on the "works for" relationship, a search engine may, from the join index 1110, follow the pointer 1112c to the relationships index. The search engine may then search all of the "works for" relationships. Searching these relationships may comprise following the references in the index to ultimately find a person named "Peter" in a "works for" relationship with a company in New Zealand. In this example, after following the pointer 1112c to the relationships index 1010, the search engine may follow each of the references that relate to a "works for" relationship-that is, the search engine may follow 4001, 4002, 4004, 4005 and 4008. These references may point to relationship entries in the relationships table 1010. For example, the reference 4005 in the relationships index 1015 has a reference, or "join path," to the row in the relationships table that relates 0001 and 3003. The references 0001 and 3003 point other indexes. For example, 0001 points to the row in the person index 915 that includes "Jackson" and 1001. The path followed by the pointer, 1116, is another join path. From the person index 915, a third join path links the aforementioned row with a row in the person table 910. This row in the Person table includes additional information about a Peter who lives in New Zealand, though at this point, the search engine has not identified a Peter who works for a company that is located in New Zealand.

Referring again to the relationships table 1010, an additional join path 1118 is associated with row 4005. In this example, this join path 1118 associates the person represented in the relationships table 1010 as "0001" with an organization named "Peter's Consulting." The search engine may follow this join path 1118 to the organization index, and may similarly follow the join path 1122 to the organization table 930. From the row in the organization table 930, the search engine identifies that "Peter's Consulting" is located in New Zealand. Tracing the join paths (1122, 1118; 1120, 1116) to the relationship table 1010, the search engine identifies a result of the original search query-a Peter who works for a company that is in New Zealand. With this search result, the search engine can provide the user with additional information. For example, the search engine could provide the last name and street address corresponding to the search query.

With the foregoing method, a search engine may implement a join index to facilitate searching for data objects based on relationships in a manner that may not be possible with other search methods. Specifically, this method may allow relationship-based searches using only partial information.

The method enables searching for business objects using their relationships. The relationships of found data objects from a first index can be used to search within related data objects, for example, from a second index. The method provides only those data objects as search resultsthat comply with the respective search statements and that have a relationship with data objects that complies with a second search statement. The method enables search engines to search for business objects based on data from related business objects.

## Claims

1. Method for searching data objects using indexes within a search engine (201), with
creating first index of a search engine (201), wherein creating the first index comprises indexing data objects of at least a first type,
**characterized by**
creating a relationship index, wherein creating the relationship index comprises indexing relationships of data objects of at least the first type, wherein indexing the relationships comprises mapping relationship type data objects representing the respective relationships into documents and indexing the documents,
determining relationships of data objects from at least the relationship index, and
searching within related data objects for data objects in compliance with at least one search statement.

2. The method of claim 1, further comprising searching within the first index for data objects of the first type with content that meets at least partially a first search statement and obtaining a first set of data objects.

3. The method of claim 2, wherein determining relationships of the data objects comprises determining relationships of the data objects of the first set of data objects.

4. The method of any one of claims 1 to 3, further comprising creating at least a second index of a search engine (201), wherein creating the at least second index comprises indexing data objects of at least a second type.

5. The method of any one of claims 2 to 3, wherein determining relationships of the data objects of the first set of data objects comprises finding related data objects within an index.

6. The method of any one of claims 1 to 5, further comprising providing a data object as a search result directly using one single search request.

7. The method of any one of claims 1 to 6, wherein indexing the relationship of the data objects comprises indexing the relationship in at least one of:
the first index;
the second index.

8. The method of claim 7, wherein determining relationships of data objects comprises searching within at least one of
the relationship index;
the first index;
the second index.

9. The method of any one of claims 1 to 8, further comprising creating a join index (203), wherein creating the join index (203) comprises indexing a relationship index for a particular type of data object together with the related data objects.

10. The method of claim 9, further comprising creating an overview index, wherein creating the overview index comprises indexing the join indexes (203) of the different types of data objects.

11. The method of claim 9 or 10, further comprising searching within the join index (203) for relationships of the data object of the first type and related data objects and obtaining a join path between the data object of the first type and related data objects.

12. The method of claim 11, further comprises using the join path to obtain the search result.

13. The method of claim 11 or 12, further comprising using the join path to obtain related data objects and searching within the related data objects tor a compliance with the second search statement.

14. The method of any one of claims 1 to 13, wherein creating the first index comprises indexing solely data objects of the first type

15. The method of any one of claims 1 to 14, wherein creating the second index comprises indexing solely data objects of the second type.

16. The method of any one of claims 2 to 15, wherein searching for a data object comprises receiving search statements from a user input dedicated to at least one of
the first type of data objects
the second type of data objects.

17. The method of any one of claims 1 to 16, further comprising storing within the relationship type data objects at least one of
a relationship type;
a relationship identifier;
a data object identifier of the involved data objects in the respective relationship;
data object types of the involved objects in the respective relationship;
an object role of the involved objects in the respective relationship.

18. The method of any one of claims 1 to 17, wherein searching for a data object comprises receiving with a search statement information about a type of relationship and searching for relationships between data objects only of the respective types.

19. The method of any one of claims 2 to 18, wherein searching for a data object comprises using a search engine (201) to execute the search within its indexes.

20. The method of any one of claims 1 to 19, wherein creating the at least first index comprises mapping data objects in unstructured documents and indexing the unstructured documents for each type of objects into the respective index.

21. The method of any one of claims 9 to 20, wherein searching for a data object comprises searching for data objects of a first type within the first index in compliance with a first search statement, determining from the join index (203) related data objects, and providing as a search result all data objects that have a relationship with a data object of the first type in compliance with the first search statement.

22. The method of any one of claims 1 to 21, wherein searching for a data object comprises searching for the data object in compliance with the search statement within the at least one index using a full-text-search.

23. A search engine (201) arranged for searching data objects using indexes with
at least a first index indexing data objects of at least a first type,
**characterized in that**
a relationship index indexing relationships of data objects of at least the first type where relationship type data objects representing the respective relationships are mapped into documents and the documents are indexed,
a search module arranged for determining relationships of data objects from at least the relationship index, and for searching within related data objects for data objects in compliance with at least one search statement.

24. A computer program product tangibly embodied in an information carrier, the computer program product comprising instructions that, when executed, cause at least one processor to perform operations comprising:
creating a first index of a search engine (201), wherein creating the first index comprises indexing data objects of at least a first type,
**characterized by**
creating a relationship index, wherein creating the relationship index comprises indexing relationships of data objects of at least the first type, wherein indexing the relationships comprises mapping relationship type data objects representing the respective relationships into documents and indexing the documents,
determining relationships of data objects from at least the relationship index, and
searching within related data objects for data objects in compliance with at least one search statement.

## Patentansprüche

1. Verfahren zum Suchen von Datenobjekten unter Verwendung von Indizes innerhalb einer Suchmaschine (201), umfassend:
Erzeugen eines ersten Indexes einer Suchmaschine (201), wobei das Erzeugen des ersten Indexes ein Indizieren von Datenobjekten wenigstens eines ersten Typs umfasst,
**gekennzeichnet durch**:
Erzeugen eines Bezugsindexes, wobei das Erzeugen des Bezugsindexes ein Indizieren von Bezügen von Datenobjekten wenigstens des ersten Typs umfasst, wobei das Indizieren der Bezüge ein Abbilden von Bezugstypdatenobjekten zur Darstellung der jeweiligen Bezüge in Dokumente und ein Indizieren der Dokumente umfasst,
Bestimmen von Bezügen von Datenobjekten aus wenigstens dem Bezugsindex, und
innerhalb bezugsrelevanter Datenobjekte erfolgendes Suchen nach Datenobjekten in Entsprechung zu wenigstens einer Suchaussage.

2. Verfahren nach Anspruch 1, des Weiteren umfassend ein innerhalb des ersten Indexes erfolgendes Suchen nach Datenobjekten des ersten Typs mit einem Inhalt, der wenigstens teilweise einer ersten Suchaussage genügt, und Ermitteln eines ersten Satzes von Datenobjekten.

3. Verfahren nach Anspruch 2, wobei das Bestimmen von Bezügen der Datenobjekte ein Bestimmen von Bezügen der Datenobjekte des ersten Satzes von Datenobjekten umfasst.

4. Verfahren nach einem der Ansprüche 1 bis 3, des Weiteren umfassend ein Erzeugen wenigstens eines zweiten Indexes einer Suchmaschine (201), wobei das Erzeugen des wenigstens zweiten Indexes ein Indizieren von Datenobjekten wenigstens eines zweiten Typs umfasst.

5. Verfahren nach einem der Ansprüche 2 bis 3, wobei das Bestimmen von Bezügen der Datenobjekte des ersten Satzes von Datenobjekten ein Ausfindigmachen von bezugsrelevanten Datenobjekten innerhalb eines Indexes umfasst.

6. Verfahren nach einem der Ansprüche 1 bis 5, des Weiteren umfassend ein direktes Bereitstellen eines Datenobjektes als Suchergebnis unter Verwendung einer einzelnen Suchanforderung.

7. Verfahren nach einem der Ansprüche 1 bis 6, wobei das Indizieren des Bezuges der Datenobjekte ein Indizieren des Bezuges in wenigstens einem von
dem ersten Index,
dem zweiten Index
umfasst.

8. Verfahren nach Anspruch 7, wobei das Bestimmen von Bezügen von Datenobjekten ein Suchen innerhalb wenigstens einem von
dem Bezugsindex,
dem ersten Index,
dem zweiten Index
umfasst.

9. Verfahren nach einem der Ansprüche 1 bis 8, des Weiteren umfassend ein Erzeugen eines Verknüpfungsindexes (203), wobei das Erzeugen des Verknüpfungsindexes (203) ein Indizieren eines Bezugsindexes für einen bestimmten Typ von Datenobjekt zusammen mit den bezugsrelevanten Datenobjekten umfasst.

10. Verfahren nach Anspruch 9, des Weiteren umfassend ein Erzeugen eines Übersichtsindexes, wobei das Erzeugen des Übersichtsindexes ein Indizieren der Verknüpfungsindizes (203) der verschiedenen Typen von Datenobjekten umfasst.

11. Verfahren nach Anspruch 9 oder 10, des Weiteren umfassend ein innerhalb des Verknüpfungsindexes (203) erfolgendes Suchen nach Bezügen des Datenobjektes des ersten Typs und bezugsrelevanter Datenobjekte und ein Ermitteln eines Verknüpfungspfades zwischen dem Datenobjekt des ersten Typs und bezugsrelevanten Datenobjekten.

12. Verfahren nach Anspruch 11, des Weiteren umfassend ein Verwenden des Verknüpfungspfades zur Ermittlung des Suchergebnisses.

13. Verfahren nach Anspruch 11 oder 12, des Weiteren umfassend ein Verwenden des Verknüpfungspfades zur Ermittlung bezugsrelevanter Datenobjekte und ein innerhalb der bezugsrelevanten Datenobjekte erfolgendes Suchen nach einer Entsprechung zu der zweiten Suchaussage.

14. Verfahren nach einem der Ansprüche 1 bis 13, wobei das Erzeugen des ersten Indexes ein Indizieren lediglich von Datenobjekten des ersten Typsumfasst.

15. Verfahren nach einem der Ansprüche 1 bis 14, wobei das Erzeugen des zweiten Indexes ein Indizieren lediglich von Datenobjekten des zweiten Typs umfasst.

16. Verfahren nach einem der Ansprüche 2 bis 15, wobei das Suchen nach einem Datenobjekt ein Empfangen von Suchaussagen von einer Anwendereingabe betreffend wenigstens einen von
dem ersten Typ von Datenobjekten,
dem zweiten Typ von Datenobjekten
umfasst.

17. Verfahren nach einem der Ansprüche 1 bis 16, des Weiteren umfassend ein innerhalb der Bezugstypdatenobjekte erfolgendes Speichern von wenigstens einem von
einem Bezugstyp,
einer Bezugskennung,
einer Datenobjektkennung der beteiligten Datenobjekte in dem jeweiligen Bezug,
Datenobjekttypen der beteiligten Objekte in dem jeweiligen Bezug,
einer Objektrolle der beteiligten Objekte in dem jeweiligen Bezug.

18. Verfahren nach einem der Ansprüche 1 bis 17, wobei das Suchen nach einem Datenobjekt ein Empfangen mit einer Suchaussageninformation über einen Typ von Bezug und ein Suchen nach Bezügen zwischen Datenobjekten nur der jeweiligen Typen umfasst.

19. Verfahren nach einem der Ansprüche 2 bis 18, wobei das Suchen nach einem Datenobjekt ein Verwenden einer Suchmaschine (201) zum Ausführen der Suche innerhalb der Indizes hiervon umfasst.

20. Verfahren nach einem der Ansprüche 1 bis 19, wobei das Erzeugen des wenigstens ersten Indexes ein Abbilden von Datenobjekten in unstrukturierten Dokumenten und ein Indizieren der unstrukturierten Dokumente für jeden Typ von Objekten in den jeweiligen Index umfasst.

21. Verfahren nach einem der Ansprüche 9 bis 20, wobei das Suchen nach einem Datenobjekt ein Suchen nach Datenobjekten eines ersten Typs innerhalb des ersten Indexes in Entsprechung zu einer ersten Suchaussage, ein aus dem Verknüpfungsindex (203) erfolgendes Bestimmen von bezugsrelevanten Datenobjekten und ein als Suchergebnis erfolgendes Bereitstellen sämtlicher Datenobjekte mit einem Bezug zu einem Datenobjekt des ersten Typs in Entsprechung zu der ersten Suchaussage umfasst.

22. Verfahren nach einem der Ansprüche 1 bis 21, wobei das Suchen nach einem Datenobjekt ein Suchen nach dem Datenobjekt in Entsprechung zu der Suchaussage innerhalb des wenigstens einen Indexes unter Verwendung einer Volltextsuche umfasst.

23. Suchmaschine (201), die für ein Suchen von Datenobjekten unter Verwendung von Indizes ausgelegt ist, umfassend:
wenigstens einen ersten Index zum Indizieren von Datenobjekten wenigstens eines ersten Typs,
**gekennzeichnet durch**:
einen Bezugsindex zum Indizieren von Bezügen von Datenobjekten wenigstens des ersten Typs, wobei Bezugstypdatenobjekte zur Darstellung der jeweiligen Bezüge in Dokumente abgebildet werden und die Dokumente indiziert werden,
ein Suchmodul, das für ein Bestimmen von Bezügen von Datenobjekten aus wenigstens dem Bezugsindex ausgelegt ist, und zum innerhalb bezugsrelevanter Datenobjekte erfolgenden Suchen nach Datenobjekten in Entsprechung zu wenigstens einer Suchaussage.

24. Computerprogrammerzeugnis, das physisch in einem Informationsträger verkörpert ist, wobei das Computerprogrammerzeugnis Anweisungen umfasst, die bei Ausführung wenigstens einen Prozessor veranlassen, Operationen auszuführen, umfassend:
Erzeugen eines ersten Indexes einer Suchmaschine (201), wobei das Erzeugen des ersten Indexes ein Indizieren von Datenobjekten wenigstens eines ersten Typs umfasst,
**gekennzeichnet durch**:
Erzeugen eines Bezugsindexes, wobei das Erzeugen des Bezugsindexes ein Indizieren von Bezügen von Datenobjekten wenigstens des ersten Typs umfasst, wobei das Indizieren der Bezüge ein Abbilden von Bezugstypdatenobjekten zur Darstellung der jeweiligen Bezüge in Dokumente und ein Indizieren der Dokumente umfasst,
Bestimmen von Bezügen von Datenobjekten aus wenigstens dem Bezugsindex, und
innerhalb bezugsrelevanter Datenobjekte erfolgendes Suchen nach Datenobjekten in Entsprechung zu wenigstens einer Suchaussage.

## Revendications

1. Méthode pour rechercher des objets de données en utilisant des index à l'intérieur d'un moteur de recherche (201), comportant les étapes suivantes :
la création d'un premier index d'un moteur de recherche (201), opération pendant laquelle la création du premier index comprend l'indexage des objets de données d'au moins un premier type,
**caractérisée par**
la création d'un index de relations, opération pendant laquelle la création d'un index de relations comprend l'indexage des relations des objets de données d'au moins du premier type, opération pendant laquelle l'indexage des relations comprend la projection des objets de données du type « relation » qui représentent les relations respectives jusque dans des documents et l'indexage des documents,
la détermination des relations des objets de données au moins à partir de l'index de relations, et
la recherche des objets de données en conformité avec au moins une caractéristique de recherche à l'intérieur des objets de données apparentés.

2. Méthode selon la revendication 1, comprenant en outre la recherche des objets de données du premier type avec un contenu qui répond au moins partiellement à une première caractéristique de recherche à l'intérieur du premier index et l'obtention d'un premier set d'objets de données.

3. Méthode selon la revendication 2, dans laquelle la détermination des relations des objets de données comprend la détermination des relations des objets de données du premier set d'objets de données.

4. Méthode selon l'une quelconque des revendications 1 à 3, comprenant en outre la création d'au moins un second index d'un moteur de recherche (201), dans laquelle la création au moins du second index comprend l'indexage des objets de données d'au moins un second type.

5. Méthode selon l'une quelconque des revendications 2 à 3, dans laquelle la détermination des relations des objets de données du premier set d'objets de données comprend le fait de trouver des objets de données apparentés à l'intérieur d'un index.

6. Méthode selon l'une quelconque des revendications 1 à 5, comprenant en outre la fourniture d'un objet de données comme un résultat de la recherche en utilisant directement une demande de recherche unique.

7. Méthode selon l'une quelconque des revendications 1 à 6, dans laquelle l'indexage des relations des objets de données comprend l'indexage des relations dans au moins un parmi :
le premier index ;
le second index.

8. Méthode selon la revendication 7, dans laquelle la détermination des relations des objets de données comprend la recherche à l'intérieur d'au moins un parmi :
l'index de relations ;
le premier index ;
le second index.

9. Méthode selon l'une quelconque des revendications 1 à 8, comprenant en outre la création d'un index de réunion (203), dans laquelle la création de l'index de réunion (203) comprend l'indexage d'un index de relations pour un type particulier d'objet de données, conjointement avec les objets de données apparentés.

10. Méthode selon la revendication 9, comprenant en outre la création d'un index de vue d'ensemble, dans laquelle la création de l'index de vue d'ensemble comprend l'indexage des index de réunion (203) des différents types d'objets de données.

11. Méthode selon l'une ou l'autre des revendications 9 et 10, comprenant en outre la recherche des relations de l'objet de données du premier type et des objets de données apparentés à l'intérieur de l'index de réunion (203), et l'obtention d'un chemin de réunion entre l'objet de données du premier type et les objets de données apparentés.

12. Méthode selon la revendication 11, comprenant en outre l'utilisation du chemin de réunion pour obtenir le résultat de la recherche.

13. Méthode selon l'une ou l'autre des revendications 11 et 12, comprenant en outre l'utilisation du chemin de réunion pour obtenir les objets de données apparentés et la recherche d'une conformité avec la seconde caractéristique de recherche à l'intérieur des objets de données apparentés.

14. Méthode selon l'une quelconque des revendications 1 à 13, dans laquelle la création du premier index comprend l'indexage seulement des objets de données du premier type.

15. Méthode selon l'une quelconque des revendications 1 à 14, dans laquelle la création du second index comprend l'indexage seulement des objets de données du second type.

16. Méthode selon l'une quelconque des revendications 2 à 15, dans laquelle la recherche d'un objet de données comprend la réception des caractéristiques de recherche à partir d'une saisie de l'utilisateur dédiée au moins à un parmi :
le premier type d'objets de données ;
le second type d'objets de données.

17. Méthode selon l'une quelconque des revendications 1 à 16, comprenant en outre la mémorisation à l'intérieur des objets de données du type « relation » d'au moins un parmi :
un type de relation ;
un identificateur de relation ;
un identificateur d'objet de données parmi les objets de données impliqués dans la relation respective ;
des types d'objets de données parmi les objets de données impliqués dans la relation respective ;
un rôle d'objet parmi les objets de données impliqués dans la relation respective.

18. Méthode selon l'une quelconque des revendications 1 à 17, dans laquelle la recherche d'un objet de données comprend la réception avec une information de caractéristique de recherche sur un type de relation et la recherche des relations entre des objets de données seulement des types respectifs.

19. Méthode selon l'une quelconque des revendications 2 à 18, dans laquelle la recherche d'un objet de données comprend l'utilisation d'un moteur de recherche (201) pour l'exécution de la recherche à l'intérieur de ses index.

20. Méthode selon l'une quelconque des revendications 1 à 19, dans laquelle la création au moins du premier index comprend la projection des objets de données dans des documents non structurés et l'indexage des documents non structurés pour chaque type d'objet jusque dans l'index respectif.

21. Méthode selon l'une quelconque des revendications 9 à 20, dans laquelle la recherche d'un objet de données comprend la recherche des objets de données d'un premier type à l'intérieur du premier index en conformité avec une première caractéristique de recherche, la détermination des objets de données apparentés à partir de l'index de réunion (203), et la fourniture de tous les objets de données qui ont une relation avec un objet de données du premier type en conformité avec la première caractéristique de recherche comme un résultat de la recherche.

22. Méthode selon l'une quelconque des revendications 1 à 21, dans laquelle la recherche d'un objet de données comprend la recherche de l'objet de données en conformité avec la caractéristique de recherche à l'intérieur d'au moins un index en utilisant une recherche à texte complet.

23. Moteur de recherche (201) aménagé pour rechercher des objets de données en utilisant des index avec :
au moins un premier index qui indexe les objets de données parmi au moins d'un premier type ;
**caractérisé en ce que**
un index de relations qui indexe des relations des objets de données d'au moins du premier type, opération pendant laquelle les objets de données du type « relation » qui représentent les relations respectives sont projetés jusque dans des documents et opération pendant laquelle les documents sont indexés,
un module de recherche aménagé afin de déterminer les relations des objets de données au moins à partir de l'index de relations et afin de rechercher des objets de données en conformité avec au moins une caractéristique de recherche à l'intérieur des objets de données apparentés.

24. Produit de programme informatique réalisé tangiblement dans un support d'informations, le produit de programme informatique comprenant des instructions qui, lorsqu'elles sont exécutées, provoquent qu'au moins un processeur accomplisse les opérations comprenant :
la création d'un premier index d'un moteur de recherche (201), opération pendant laquelle la création du premier index comprend l'indexage des objets de données d'au moins un premier type,
**caractérisé par**
la création d'un index de relations, opération pendant laquelle la création de l'index de relations comprend l'indexage des relations des objets de données d'au moins du premier type, opération pendant laquelle l'indexage des relations des objets de données comprend la projection des objets de données du type « relation » qui représentent les relations respectives jusque dans des documents et l'indexage des documents,
la détermination des relations des objets de données au moins à partir de l'index de relations, et
la recherche des objets de données en conformité avec au moins une caractéristique de recherche à l'intérieur des objets de données apparentés.
